# EUROPÄISCHE PATENTANMELDUNG

(11) **EP 2 045 892 A2**
(43) Veröffentlichungstag der Anmeldung: **08.04.2009**
(21) Anmeldenummer: 08016937.8
(22) Anmeldetag: 26.09.2008
(51) Int. Cl.: H02G 3/10, H02G 3/18

(54) **Multifunktionaler Wandverteiler**

(30) Priorität: 01.10.2007 DE 202007013699 U
(71) Anmelder: Tehalit GmbH, 67716 Heltersberg (DE)
(72) Erfinder: Schnurr, Richard, 66957 Vinningen (DE); Roschy, Gerd, 67714 Waldfischbach-Burgalben (DE); Broschart, Peter, 67715 Geiselberg (DE)
(74) Vertreter: Patentanwälte Möll und Bitterich

(57) **Zusammenfassung**

Die vorliegende Erfindung betrifft einen Wandverteiler mit Anschlussvorrichtungen für Elektrogeräte und/oder Telekommunikationseinrichtungen zur Anbindung an einen Leitungsführungskanal, umfassend eine Gehäuseeinheit mit einem Unterteil (10), bestehend aus einem Boden (8), einer Frontplatte (16), zwei Seitenwänden (12), einem auf das Unterteil (10) aufsetzbaren Deckel (20), Anschlusseinrichtungen (30) zur Bereitstellung von Energie, Daten oder Signalen, wobei die Gehäuseeinheit über eine Wandhalterung (14) an einer Wand befestigbar ist, **dadurch gekennzeichnet, dass** die Anschlusseinrichtungen (30) im Inneren der Gehäuseeinheit zur Versorgung der Elektrogeräte und/oder Telekommunikationseinrichtungen am Unterteil (10) angebracht sind und eine Anbindung an Aufputz- und/oder Unterputzkanäle erfolgt.

## Beschreibung

Die vorliegende Erfindung betrifft einen Wandverteiler mit in einer Gehäuseeinheit integrierten Anschlussvorrichtungen für Elektrogeräte und/oder Telekommunikationseinrichtungen gemäß dem Oberbegriff nach Anspruch 1.

In vielen modernen Wohnräumen tritt das Problem auf, dass für die Verkabelung von multimedialen Elektrogeräten (Audio- und Videogeräte, Hifi-Komponenten, TV) eine Vielzahl von Kabeln und Leitungen zur Stromversorgung und Signalleitung bereitgestellt werden müssen. Die Kabel verlaufen häufig hinter und neben den Geräten, was optisch nicht ansprechend ist. Das Verlegen der Kabel und Leitungen in Leitungsführungskanälen schafft eine gewisse Ordnung.

Zur Stromversorgung der Elektrogeräte werden mehrere Anschlüsse wie z.B. Netzsteckdosen benötigt. Häufig befindet sich an der Wand nur eine Steckdose, an die mehrere Elektrogeräte angeschlossen werden müssen. Über Mehrfachsteckdosen und Verteilerleisten werden weitere Steckplätze zur Verfügung gestellt. Bei Arbeitsplätzen müssen daneben auch ausreichend Netzwerk- und Datenanschlüsse vorhanden sein.

Der vorliegenden Erfindung liegt die Aufgabe zugrunde, eine Anschlusseinrichtung bereitzustellen, die direkt an die Wand, vorzugsweise direkt über eine Wandsteckdose (z.B. Unterputzdose) anbringbar ist, mehrere Anschlusseinrichtungen zur Versorgung von Elektrogeräten mit Energie oder Daten bereitstellt, und eine Kaschierung der Kabel und Leitungen der Elektrogeräte (z. B. Audioanlage oder Videoanlage) ermöglicht.

Diese Aufgabe wird gelöst durch einen multifunktionalen Wandverteiler mit den technischen Merkmalen gemäß Anspruch 1.

Der erfindungsgemäße Wandverteiler besteht aus einer Gehäuseeinheit mit einem Unterteil und einem Deckel. Im Gehäuseinneren der Gehäuseeinheit befinden sich Anschlusseinrichtungen für Energie-, Signal- oder Datenleitungen, z.B. für den Anschluss von Stromkabeln, Netzwerkkabeln oder Datenleitungen für die Elektrogeräte oder Telekommunikationseinrichtungen. Vorzugsweise handelt es sich bei den Anschlusseinrichtungen um Steckdosen, insbesondere Mehrfachsteckdosen, Netzwerkanschlüsse, Datenanschlüsse, Antennenanschlüsse, Monitoranschlüsse, Audio- und Video-Anschlüsse, Telefonanschlüsse oder sonstige Signalanschlüsse.

Die Wandhalterung des Unterteils besitzt vorzugsweise eine Aussparung und Befestigungsöffnungen, um den erfindungsgemäßen Wandverteiler direkt über eine Wanddose an einer Wand zu befestigen oder die Durchführung eines Kabels zum Wandverteiler zu ermöglichen. Auf diese Weise können zum Beispiel Mehrfachsteckdosen des Wandverteilers mit der Wandsteckdose verbunden werden. Die Wanddose selbst wird überdeckt. Der Wandverteiler kann ferner mit Leitungsführungskanälen (Aufputz oder Unterputz) verbunden sein, welche die Leitungen zu den Elektrogeräten oder Wandanschlüssen führen.

Der erfindungsgemäße Wandverteiler besitzt den Vorteil, dass zum einen die Kabel und Leitungen von Elektrogeräten kaschiert werden und das Kabelaufkommen praktisch nicht mehr zu sehen ist. Die Kabel können hierzu direkt im Gehäuseinneren verstaut werden. Vorzugsweise befinden sich in dem Stauraum zusätzliche Kabelhalterungen zur Aufnahme und Befestigung der Kabel.

Der Deckel eignet sich zum Abstellen eines Elektrogerätes, z. B. eines Audio- oder Videogerätes in einem Wohnbereich oder eines Bildschirms in einem Arbeitszimmer. Um den Zugang zu den Anschlusseinrichtungen im Gehäuseinneren zu erleichtern, wird der Deckel vorzugsweise über Führungsschienen, beispielsweise in Form eines Tablarauszuges, beweglich mit dem Unterteil befestigt. In einer anderen Ausführungsform wird der Deckel direkt auf das Unterteil aufgerastet. In einer weiteren Ausführungsform wird der Deckel mit dem Unterteil verschraubt. In einer weiteren Variante wird der Deckel über seitliche Führungsprofile am Deckel und dem Unterteil mit dem Unterteil verbunden.

Die auf dem Wandverteiler abgestellten Komponenten haben Bodenfreiheit, wodurch u.a. die Bodenreinigung im Raum erleichtert wird und ein Rack, Regal oder Schrank für die Komponenten überflüssig wird. Über vertikale und horizontale an der Wand angebrachte Leitungsführungskanäle kann eine Leitungsführung erfolgen. Beispielsweise kann ein vertikal verlaufender Flachkanal zu einem Flachbildschirm geführt werden. Die Einspeisung in den Wandverteiler kann über einen horizontal oder vertikal angebrachten Aufputzkanal erfolgen oder über Unterputzeinspeisung.

### Die Erfindung wird in den folgenden Zeichnungen näher erläutert. Es zeigen:

- Fig. 1: eine isometrische Darstellung des erfindungsgemäßen Wandverteilers mit geöffnetem Deckel in Rückansicht,
- Fig. 2: eine Vorder- und Rückansicht des erfindungsgemäßen Wandverteilers mit geschlossenem Deckel und
- Fig. 3: ein Ausführungsbeispiel eines installierten Wandverteilers in einem Wohnbereich.

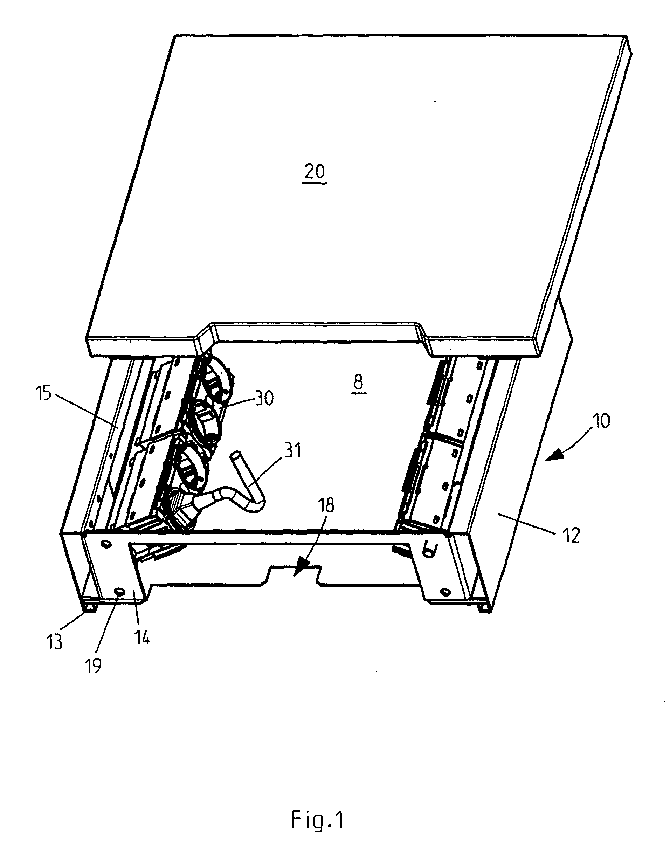

In Fig. 1 erkennt man den Aufbau des erfindungsgemäßen Wandverteilers. Gezeigt ist eine Rückansicht. Der Wandverteiler besteht aus einem Unterteil 10 und einem Deckel 20. Das Unterteil 10 wird von einem Boden 8, zwei Seitenwänden 12, einer Wandhalterung 14 und einer Frontplatte 16 (in dieser Figur nicht zu sehen) gebildet. Im Gehäuseinneren befinden sich Anschlusseinrichtungen 30 (in dieser Ausführungsform Mehrfachsteckdosen), die vorzugsweise an die Seitenwand 12 befestigt sind. Eine Befestigung kann beispielsweise durch Verrastung über die U-förmig ausgestalteten Seitenwände 12 durch Halteprofile 13 erfolgen.

In der gezeigten Ausführungsform besitzt die Wandhalterung 14 eine Aussparung 18, so dass der Wandverteiler direkt über eine Wanddose angebracht werden kann. Die Aussparung 18 sitzt dann genau über der Wanddose und bedeckt diese. Durch die Aussparung 18 kann das Netzkabel 31 für die Anschlusseinrichtungen 30 (Mehrfachsteckdosen) direkt mit der Wanddose verbunden werden.

Die Seitenwand 12 ist vorzugsweise U-förmig ausgestaltet und besitzt an ihren Schenkeln ein Halteprofil 13, das in einer Variante zur Aufnahme und Befestigung der Anschlusseinrichtungen 30 dienen kann. In einer bevorzugten Ausführungsform wird der Deckel 20 über Führungsschienen 15 beweglich, d.h. ausziehbar, mit dem Unterteil 10 verbunden.

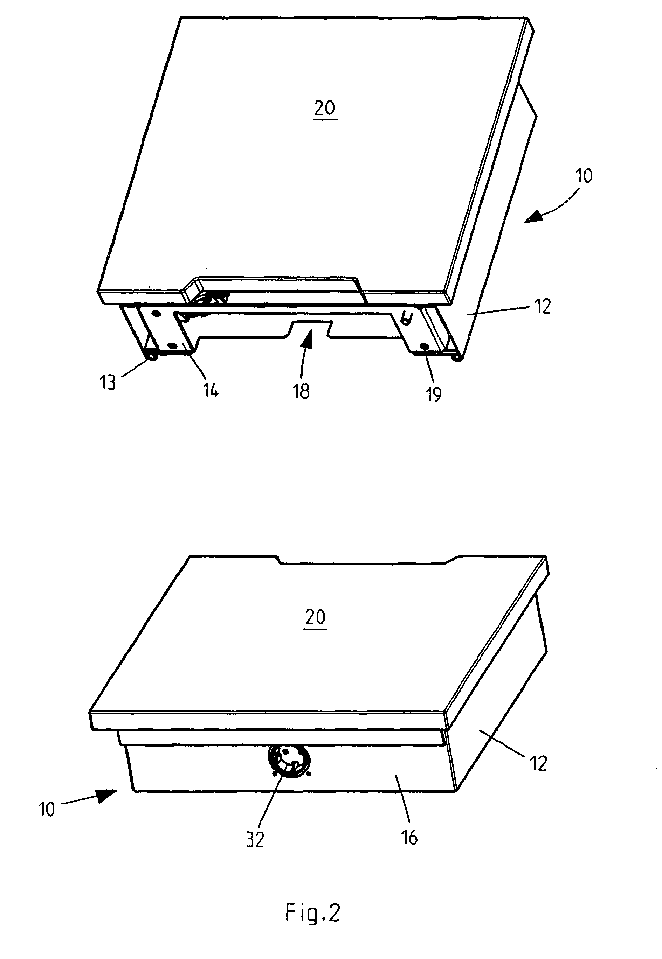

In Fig. 2 ist der erfindungsgemäße Wandverteiler mit geschlossenem Deckel 20 von der Rückseite (oben) bzw. von der Vorderseite (unten) gezeigt. An der Frontplatte 16 ist vorzugsweise eine externe Anschlusseinrichtung 32 (z. B. Steckdose) für den Anschluss eines Elektrogerätes von außen oder ein Funktionsschalter (z.B. An- und Ausschalter) für die internen Anschlusseinrichtungen (z.B. Hauptnetzschalter) vorgesehen. Auf dem Deckel 20 kann ein beliebiges Elektrogerät, z. B. ein Audio- oder Videogerät, abgestellt werden. Der erfindungsgemäße Wandverteiler stellt zum einen mehrere Anschlussmöglichkeiten und Steckplätze bereit. Des Weiteren kaschiert er das Kabelaufkommen von Elektrogeräten. Über Leitungsführungskanäle können die Leitungen und Kabel der Elektrogeräte direkt an der Wand verlegt werden.

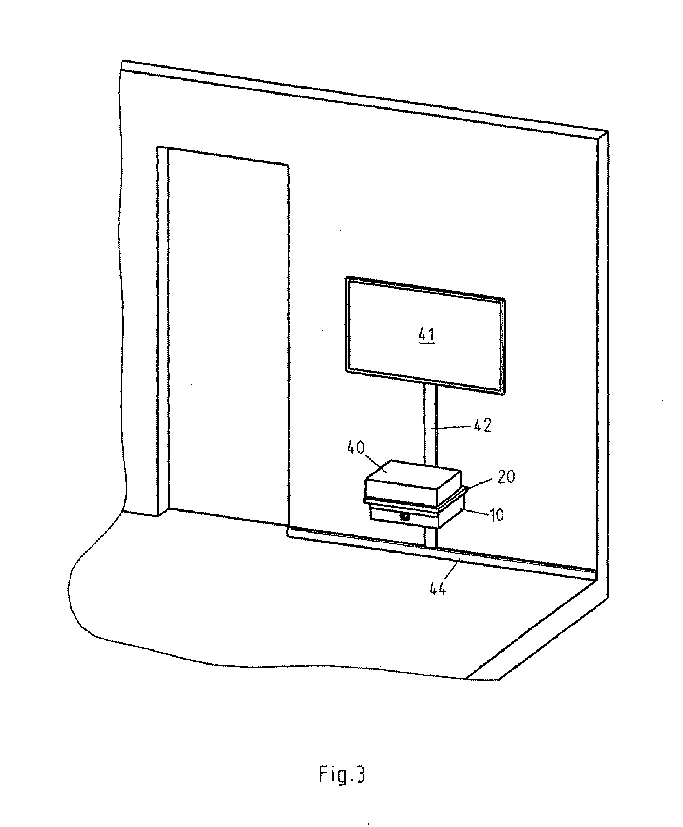

In Fig. 3 ist ein Anwendungsbeispiel des erfindungsgemäßen Wandverteilers gezeigt. An der Wand ist ein horizontaler Wandkanal 44 und ein zu einem Flachbildschirm 41 verlaufender vertikaler Wandkanal 42 angeordnet. Der erfindungsgemäße Wandverteiler wird direkt an der Wand befestigt. Auf dem Deckel 20 befindet sich ein Elektrogerät 40 (z. B. DVD-Spieler oder Receiver).

## Patentansprüche

1. Wandverteiler mit Anschlussvorrichtungen für Elektrogeräte und/oder Telekommunikationseinrichtungen zur Anbindung an einen Leitungsführungskanal, umfassend
- eine Gehäuseeinheit mit
- einem Unterteil (10), bestehend aus
- einem Boden(8),
- einer Frontplatte (16),
- zwei Seitenwänden (12),
- einem auf das Unterteil (10) aufsetzbaren Deckel (20),
- Anschlusseinrichtungen (30) zur Bereitstellung von Energie, Daten oder Signalen, wobei die Gehäuseeinheit über eine Wandhalterung (14) an einer Wand befestigbar ist, **dadurch gekennzeichnet, dass** die Anschlusseinrichtungen (30) im Inneren der Gehäuseeinheit zur Versorgung der Elektrogeräte und/oder Telekommunikationseinrichtungen am Unterteil (10) angebracht sind und eine Anbindung an Aufputz- und/oder Unterputzkanäle erfolgt.

2. Wandverteiler nach Anspruch 1, **dadurch gekennzeichnet, dass** an den Seitenwänden (12) Führungsschienen (15) zum Herausziehen des Deckels (20) angebracht sind.

3. Wandverteiler nach einem der vorherigen Ansprüche, **dadurch gekennzeichnet, dass** sich an der Wandhalterung (14) eine Aussparung (18) zur Aufnahme einer Wanddose und/oder zur Durchführung eines Anschlusskabels (31) zum Wandverteiler befindet.

4. Wandverteiler nach einem der vorherigen Ansprüche, **dadurch gekennzeichnet, dass** im Gehäuseinneren ein Stauraum zur Kabelaufnahme bereitgestellt wird.

5. Wandverteiler nach einem der vorhergehenden Ansprüche, **dadurch gekennzeichnet, dass** die Seitenwände (12) nach innen in etwa U-förmig ausgestaltet sind und sich an deren Schenkeln Halteprofile (13) zur Befestigung der Anschlusseinrichtungen (30) befinden.

6. Wandverteiler nach einem der vorhergehenden Ansprüche, **dadurch gekennzeichnet, dass** die Anschlusseinrichtungen (30) mit den Seitenwänden (12) über die Halteprofile (13) verrastet werden.

7. Wandverteiler nach einem der vorhergehenden Ansprüche, **dadurch gekennzeichnet, dass** sich an der Frontplatte (16) eine Anschlusseinrichtung (32) und/oder ein Funktionsschalter für die internen Anschlusseinrichtungen (30) befindet.

8. Wandverteiler nach einem der vorhergehenden Ansprüche, **dadurch gekennzeichnet, dass** die Gehäuseeinheit mit einem Wandkanal (44) für die zuführenden oder abführenden Kabel und Leitungen zum Wandverteiler verbunden ist.

9. Wandverteiler nach einem der vorhergehenden Ansprüche, **dadurch gekennzeichnet, dass** der Deckel (20) zur Aufnahme von Elektrogeräten (40) ausgestaltet ist.

10. Wandverteiler nach einem der vorhergehenden Ansprüche, **dadurch gekennzeichnet, dass** die Einspeisung über horizontale und/oder vertikale Aufputzkanäle erfolgt.

11. Wandverteiler nach einem der vorhergehenden Ansprüche, **dadurch gekennzeichnet, dass** die Einspeisung Unterputz erfolgt.

12. Wandverteiler nach einem der vorhergehenden Ansprüche, **dadurch gekennzeichnet, dass** es sich bei den Anschlusseinrichtungen (30) um Steckdosen, insbesondere Mehrfachsteckdosen, Netzwerkanschlüsse, Datenanschlüsse, Antennenanschlüsse, Monitoranschlüsse, Audio- und Video-Anschlüsse, Telefonanschlüsse oder sonstige Signalanschlüsse handelt.
